# EUROPÄISCHE PATENTANMELDUNG

(11) **EP 0 856 642 A1**
(43) Veröffentlichungstag der Anmeldung: **05.08.1998**
(21) Anmeldenummer: 98101419.4
(22) Anmeldetag: 28.01.1998
(51) Int. Cl.: F01L 1/047, F16H 53/02, B23P 11/00

(54) **Gebaute Nockenwelle**

(30) Priorität: 30.01.1997 DE 19703260
(71) Anmelder: Industria Fahrzeugtechnik GmbH & Ko. KG, 08058 Zwickau (DE)
(72) Erfinder: Gropp, Herbert, Dr.-Ing., 09114 Chemnitz (DE); Klose, Dietmar, Dipl.-Ing., 09122 Chemnitz (DE); Dürlich, Klaus-Peter, Dipl.-Ing., 08052 Zwickau (DE); Janssen, Manfred, Dr.-Ing., 08412 Werdau (DE)
(74) Vertreter: Rumrich, Gabriele

(57) **Zusammenfassung**

Um mit handelsüblichen Ausgangsmaterialien und Halbzeugen durch Längsaufpressen von Nocken und sonstigen Teilen auf Rohr oder Vollstab ein kostengünstiges Massenprodukt zu erzeugen, sind Rohr oder Vollstab (1) außen oder Nocken (3) und / oder sonstige Teile an der Innenseite mit einer geeigneten Schicht (2), z. B. einer verbundstabilen Konversionsschicht, überzogen.

## Beschreibung

Die Erfindung betrifft eine gebaute Nockenwelle bestehend aus Rohr oder Vollstab, Nocken, Lagerringen, Endstücken und sonstigen Teilen.

Gebaute Nockenwellen sind heute im wesentlichen durch partielles Innenhochdruckumformen von Rohr gegen die Nocken, durch Aufwerfen der Rohroberfläche und Aufquetschen der Nocken oder durch Aufschrumpfung der Nocken auf das Rohr erzeugt.
Auch das Ausformen der Nocken aus dem Rohr durch Innenhochdruckumformen wird überlegt.

Allen diesen Herstellverfahren haften jedoch erhebliche Nachteile an. Die Ausgangsmaterialien müssen hinsichtlich Abmessung und Werkstoffkennwerten eng toleriert sein, und die Fügetechnik ist kompliziert. Das Innenhochdruckumformen ist aufwendig und schafft ausgedünnte Wände gerade an den wichtigen Nockenspitzen.

Von diesem Stand der Technik ausgehend liegt der Erfindung die Aufgabe zugrunde, aus handelsüblichen Materialien und Halbzeugen mit einfacher Technologie eine Nockenwelle zu bauen, die in Großserie günstige Stückkosten ergibt.

Die Aufgabe wird gelöst durch die Ausbildung der gebauten Nockenwelle nach dem kennzeichnenden Teil des Anspruchs 1.

Zweckmäßige Ausgestaltungen der Erfindung enthalten die Unteransprüche.

Die Befestigung der Nocken und übrigen Teile auf dem Rohr, erfolgt mit einer Längspreßverbindung. Damit die mit Übermaß aufzuschiebenden Nocken nicht fressen, der Reibschluß erhöht wird und später keine Tribokorrosion entsteht, ist das Rohr beschichtet, vorzugsweise mit der aus dem DDR - Wirtschaftspatent 015 2972 bekannten feinkristallinen Phosphatschicht. Die Nocken werden nach sorgfältigem Aufschnäbeln in einem Fügeautomat an ihren Platz geschoben und zwar kontinuierlich ohne Stick - Slip - Effekt. Die Oberfläche des Rohrs oder Vollstabs wird dabei nicht in Mitleidenschaft gezogen und weist keinerlei Riefen auf.
Durch die Beschichtung ist es auch möglich, die Feinpositionierung auf + 0,1mm längs und +/- 10 Bogenminuten genau vorzunehmen. Rohr oder Vollstab, Nocken und übrige Teile, sofern sie längs aufgepreßt werden, brauchen keine besonders engen Abmessungs- und Werkstofftoleranzen, sondern können in handelsüblicher Qualität eingesetzt werden. Eine Verdrehfestigkeit von 10 - 20 Nm kann unschwer erreicht werden.

Die genaue Positionierung jedes einzelnen Nockens ist durch das Längspreßverfahren aufgeeignet beschichteter Oberfläche zu gewährleisten. Nockenwellen müssen aber auch als Ganzes so geringe Abmaße aufweisen, daß die beiden am weitesten auseinander stellenden Nocken untereinander ebenfalls nur sehr geringe Abweichungen von der idealen Position aufweisen dürfen. Deshalb wird ein geringfügiges Nachschleifen der Nockenlauffläche vorgesehen. Ziel ist das "Fügen und fertig" ohne Nachschleifen, das aus den Erfahrungen der Großserienfertigung erwachsen muß. Dies ist bei dem vorliegenden Gegenstand der Erfindung erreichbar.

Alle auf das Rohr aufzubringenden Einzelteile können vorher vollständig fertig bearbeitet werden einschließlich der Oberflächenhärtung.

Statt der feinkristallinen Phosphatschicht sind andere Oberflächenbeschichtungen, wie Metall und Kleber möglich. Im letzteren Fall ist die Ausbildung der aufzuschiebenden Stirnfläche von Wichtigkeit für die Verteilung des Klebers auf dem Rohr oder Vollstab.

Die Beschichtung kann einseitig oder beidseitig auf Rohraußen- und / oder Nockeninnenbohrung erfolgen.

Die Nocken bestehen zweckmäßigerweise aus Blechleichtbau, bekannt z. B. aus der deutschen Patentanmeldung 196 40 872.5. Sie können aber auch aus Vollmaterial, Kunststoff oder Keramikmaterial bestehen. Das Rohr reicht in gezogener Oberflächenqualität aus, auch für Lagersitze. Es kann aber ein Überschleifen der Lagerstellen aus Toleranzgründen erforderlich sein.

Nachstehend wird die Erfindung durch Ausführungsbeispiele näher erläutert. Es zeigen :
- Fig. 1: den schematischen Schnitt durch ein Nockenwellensegment
- Fig. 2: den schematischen Schnitt durch ein Nockenwellenende
- Fig. 3: die Ansicht einer gesamten Nockenwelle in verkleinerter Darstellung

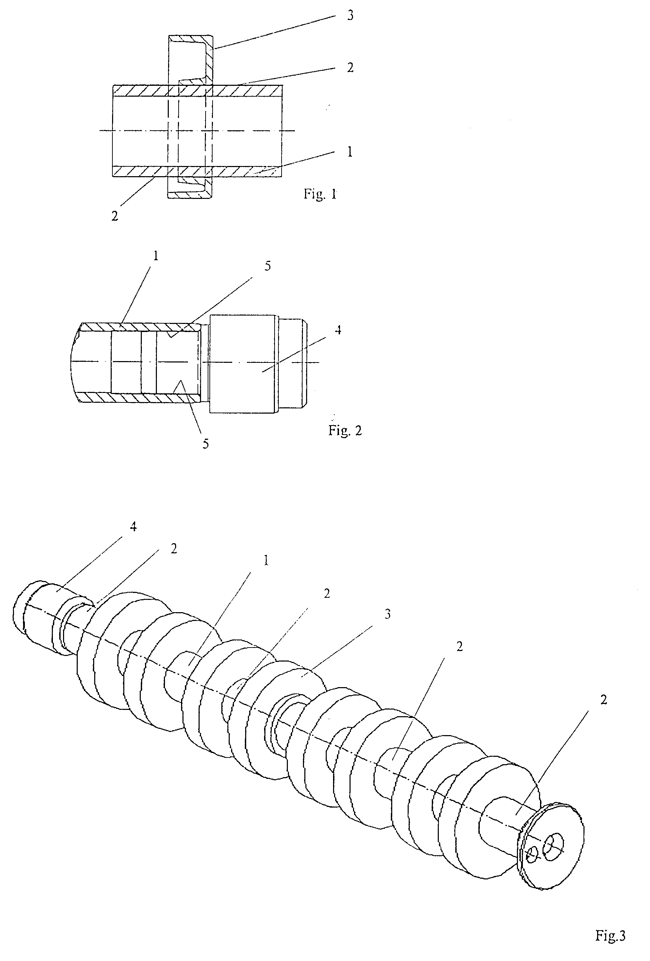

In Fig 1 ist zwischen Rohr (1) und dem Blechleichtbaunocken (3) die Verbundschicht (2) angedeutet, die in Wirklichkeit allerdings eine nicht meßbare Radialausdehnung hat.

In Fig. 2 trägt das Rohr eine Innenbeschichtung (5), sodaß das Endstück (4) eingepreßt werden kann.

Fig. 3 zeigt eine ganze Nockenwelle, an der alle auf das Rohr aufzubringenden Teile längs aufgepreßt sind. Die Nocken sind der Einfachheit halber als Scheiben dargestellt.

## Patentansprüche

1. Gebaute Nockenwelle, bestehend aus Rohr oder Vollstab sowie Nocken, Lagerringen, Endstücken und sonstigen Teilen, **dadurch gekennzeichnet,** daß Nocken (3) , Endstücke (6), Lagerringe und sonstige Teile mit dem Rohr oder dem Vollstab mittels Längspreßverbindungen verbunden sind und das Rohr und die damit zu verbindenden Teile mit einer geeigneten die Belastungsfähigkeit gegenüber konventionellen Preßverbindungen erhöhenden und die Tribokorrosion verhindernden Oberflächenbeschichtung versehen sind.

2. Gebaute Nockenwelle nach Anspruch 1, **dadurch gekennzeichnet,** daß es sich bei der Schicht (2,5) um eine verbundstabile Konversionsschicht handelt.

3. Gebaute Nockenwelle nach Anspruch 1, **dadurch gekennzeichnet,** daß es sich bei der Schicht (2,5) um Metall oder Klebstoff handelt.

4. Gebaute Nockenwelle nach Anspruch 1, **dadurch gekennzeichnet,** daß das Rohr oder der Vollstab und / oder die Nocken, Endstücke, Lagerringe und sonstige Teile aus Metall, Keramik, Kunststoff oder anderen Werkstoffen spanabhebend oder spanlos, massiv oder profiliert ausgeführt sind.

5. Gebaute Nockenwelle nach Anspruch 1, **dadurch gekennzeichnet,** daß die Außenmantelfläche des Rohres oder des Vollstabes gezogene Qualität hat oder vollständig oder teilweise mechanisch bearbeitet ist.
